# EUROPÄISCHE PATENTSCHRIFT

(11) **EP 2 404 096 B1**
(45) Veröffentlichungstag und Bekanntmachung des Hinweises auf die Patenterteilung: **07.10.2015**
(21) Anmeldenummer: 10706930.4
(22) Anmeldetag: 19.02.2010
(51) Int. Cl.: F16L 33/207

(54) **SANITÄRE SCHLAUCHKUPPLUNG**
SANITARY HOSE COUPLING
RACCORD DE TUYAUX SANITAIRE

(30) Priorität: 03.03.2009 DE 102009011411
(43) Veröffentlichungstag der Anmeldung: 11.01.2012
(73) Patentinhaber: Neoperl GmbH, 79379 Müllheim (DE)
(72) Erfinder: MAGER, Kevin, 79379 Müllheim (DE); KURY, Werner, 79379 Müllheim (DE)
(74) Vertreter: Kunst, Manuel Nikolaus Johannes
(86) Internationale Anmeldenummer: PCT/EP2010/001057
(87) Internationale Veröffentlichungsnummer: WO 2010/099878

(56) Entgegenhaltungen:
- DE-C1- 19 936 413
- FR-A1- 2 894 011
- JP-A- 8 226 589
- US-A- 4 330 142
- US-A- 4 817 997

## Beschreibung

Die Erfindung betrifft eine sanitäre Schlauchkupplung mit einem rohrförmigen Kupplungs-Grundkörper, der an zumindest einem seiner Grundkörper-Endbereiche einen, zumindest in einem Teilbereich profilierten Schlauchstutzen zum Aufschieben eines flexiblen Wasserschlauches hat, welcher an seinem freien Stutzenendbereich einen sich zum freien Stutzenende hin konisch verjüngenden Aufschiebekonus hat, sowie mit einer Quetschhülse, die in verformtem Zustand ein von der Quetschhülse umschlossenes Schlauchende des Wasserschlauches auf dem Schlauchstutzen fixiert, wobei das von der Quetschhülse umgriffene Schlauchende des Wasserschlauches auf dem Schlauchstutzen drehfest fixierbar ist, wobei das Schlauchende auf einen in Umfangsrichtung unrunden Profilabschnitt des Schlauchstutzens aufschiebbar ist, der an dem dem freien Stutzenende abgewandten Teilbereich des Schlauchstutzens vorgesehen ist, und wobei zwischen dem Aufschiebekonus und dem unrunden Profilabschnitt zumindest ein Ringflansch oder ein Ringabsatz vorgesehen ist.

Sanitäre Schlauchkupplungen der eingangs erwähnten Art werden regelmäßig an den Schlauchenden einer flexiblen Schlauchleitung verwendet. Solche flexiblen Schlauchleitungen werden zunehmend eingesetzt, um beispielsweise den wandseitigen Leitungsanschluss einer sanitären Wasserleitung mit einer sanitären Auslaufarmatur verbinden zu können, die an einem Waschbecken montiert ist. Dabei ist die Auslaufarmatur regelmäßig an dem dem Anwender abgewandten Beckenrand des Waschbeckens montiert. Da die Zugänglichkeit des der Schlauchkupplung zugeordneten Kupplungsgegenstücks an der Auslaufarmatur durch das Waschbecken behindert wird und da die Zugänglichkeit des an der Auslaufarmatur vorgesehenen Kupplungsgegenstücks durch die Anordnung der Auslaufarmatur an dem dem Anwender abgewandten Beckenrand noch zusätzlich erschwert ist, ist die Montage und Demontage einer flexiblen Schlauchleitung an dem an der Auslaufarmatur vorgesehenen Kupplungsgegenstück oft nur unter erheblichen Schwierigkeiten möglich. Zum Ansetzen eines Schraubenschlüssels oder einer Rohrzange an der der Auslaufarmatur zugewandten Schlauchkupplung fehlt häufig der erforderliche Platz.

Vorbekannte Schlauchkupplungen weisen regelmäßig einen rohrförmigen Kupplungs-Grundkörper auf. Dabei wird das auf den Schlauchstutzen aufgeschobene Schlauchende des flexiblen Wasserschlauches mittels einer Quetsch- oder Klemmhülse gesichert, die in gequetschtem und in entsprechend verformten Zustand das auf dem Schlauchstutzen aufgeschobene Schlauchende derart fest umschließt, dass dieses Schlauchende in die am Schlauchstutzen vorgesehenen Profilierungen gepresst wird. Da diese Profilierungen rotationssymmetrisch ausgebildet sind, und da das auf dem Schlauchstutzen aufgeschobene Schlauchende sich deshalb relativ zur Schlauchkupplung leicht verdrehen lässt, ist es für eine wasserdichte Verbindung der Schlauchkupplung meist erforderlich, diese trotz der beengten Platzverhältnisse im Bereich des Waschbeckens mit Hilfe eines an der Schlauchkupplung angesetzten Werkzeuges zu montieren oder zu demontieren.

Aus der DE 199 36 413 C1 kennt man eine sanitäre Schlauchkupplung der eingangs erwähnten Art mit einem rohrförmigen Kupplungsgrundkörper, der an dem einen seiner Grundkörper-Endbereiche einen profilierten Schlauchstutzen zum Aufschieben eines flexiblen Wasserschlauches hat. Der Wasserschlauch wird auf dem Schlauchstutzen mittels einer Quetschhülse gesichert, die in verformtem Zustand ein von der Quetschhülse umschlossenes Schlauchende des Wasserschlauches auf diesem Schlauchstutzen fixiert. Um das von der Quetschhülse umgriffene Schlauchende des Wasserschlauches auf dem Schlauchstutzen drehfest zu fixieren, ist das Schlauchende des flexiblen Wasserschlauches auf einen in Umfangsrichtung unrunden Profilabschnitt des Schlauchstutzens aufschiebbar. Dieser unrunde Profilabschnitt des Schlauchstutzens weist im Querschnitt dreieckige und durch Halte- und Stützflächen gebildete Profilabschnitte auf, die über den im Querschnitt runden Kupplungsgrundkörper radial vorstehen. Diese im Querschnitt dreieckigen Profilabschnitte schneiden sich mit der, in der Verbindungslinie von Halte- und Stützfläche gebildeten Kante tief in das elastisch nachgiebige Material des flexiblen Wasserschlauches ein. Durch diese Einschnitte erfährt der Wasserschlauch bereits eine Schwächung des Schlauchmaterials. Da diese Profilabschnitte jede Verdrehung zwischen dem Wasserschlauch und dem Schlauchstutzen unterbinden, wird das Risiko einer funktionsbeeinträchtigenden Leckage noch zusätzlich erhöht, wenn auf dem Wasserschlauch eine übergroße Drehkraft einwirkt.

Aus der JP 8 226589 A kennt man bereits eine sanitäre Schlauchkupplung, die ebenfalls an einem Grundkörper-Endbereich einen profilierten Schlauchstutzen hat. Der Schlauchstutzen, auf den ein elastischer Wasserschlauch aufschiebbar ist, weist im Verlaufe seiner Längserstreckung zwei voneinander beabstandete Querschnittserweiterungen auf, die sich in Aufschieberichtung erweitern und auf der, dem freien Stutzenende abgewandten Seite durch eine Radialebene derart scharfkantig begrenzt werden, dass ein unbeabsichtigtes Abziehen des Wasserschlauchendes vom Schlauchstutzen praktisch nicht möglich ist. An diese Querschnittserweiterungen schließt sich in Aufschieberichtung ein runder Stutzenteilbereich an, an dem auf gegenüberliegenden Seiten in Längsrichtung orientierte Drehsicherungsstege vorstehen, die sich in das elastische Material eingraben und ein Verdrehen des elastischen Wasserschlauches relativ zum Schlauchstutzen mit Sicherheit ausschließen sollen.

Aus der US 4 330 142 A kennt man bereits eine Schlauchkupplung, deren an einem Grundkörper-Endbereich vorgesehener Schlauchstutzen in Stutzenlängsrichtung sich in gleichmäßigen Abständen abwechselnde Querschnittserweiterungen und Querschnittseinschnürungen aufweist, wobei am Schlauchstutzen außenumfangsseitig eine Vielzahl von Stiften vorstehen, welche sich auch hier derart in das elastische Material des Wasserschlauches eingraben sollen, dass ein Abziehen des Schlauchendes vom Schlauchstutzen und deren Verdrehen relativ zueinander verhindert wird.

Bei den vorbekannten Schlauchkupplungen ist der zum Aufschieben des Wasserschlauch-Endes bestimmte Profilabschnitt stets derart, im weitesten Sinne unrund gestaltet, dass ein Abziehen des Schlauchendes vom Schlauchstutzen und ein Verdrehen des Schlauchendes gegenüber dem Schlauchstutzen mit Sicherheit verhindert werden kann.

Es besteht aber die Aufgabe, eine sanitäre Schlauchkupplung der eingangs erwähnten Art zu schaffen, die die Montage des mit ihr verbundenen Wasserschlauches auch unter beengten Platzverhältnissen wesentlich erleichtert, wobei eine Beschädigung des elastischen Materials des Wasserschlauches durch Aufbringen eines übergroßen Drehmoments auf den Wasserschlauch unbedingt vermieden werden muss.

Die erfindungsgemäße Lösung dieser Aufgabe besteht bei der sanitären Schlauchkupplung der eingangs erwähnten Art insbesondere darin, dass der unrunde Profilabschnitt in Umfangsrichtung drei- oder viereckig ausgebildet ist, und dass die Ecken des unrunden Profilabschnitts über Hauptflächen verbunden sind, die konkav geformt oder plan ausgebildet sind.

Bei der erfindungsgemäßen Schlauchkupplung ist das von der Quetschhülse umgriffene Schlauchende des Wasserschlauches auf dem Schlauchstutzen drehfest fixierbar. Gleichzeitig ist das Schlauchende des Wasserschlauches auf einen in Umfangsrichtung unrunden Profilabschnitt des Schlauchstutzens aufschiebbar. Insbesondere wenn die Quetschhülse im Bereich des unrunden Profilabschnitts derart vercrimpt ist, dass die Quetsch- oder Klemmhülse das Schlauchende fest umgreifen und in die Profilierungen am Schlauchstutzen pressen kann, wird eine in Umfangsrichtung des Schlauches auf den Schlauch einwirkende Kraft nicht zwangsläufig in eine Drehbewegung des Schlauches relativ zur Schlauchkupplung umgesetzt. Zusätzlich oder stattdessen ist es auch möglich, dass das in den vercrimpten Bereichen der Quetschhülse verdrängte Schlauchmaterial derart in den zwischen dem unrunden Profilabschnitt einerseits und dem gegebenenfalls auch unvercrimpten Teilbereich der Quetschhülse andererseits umgrenzten Ringraum verdrängt und dort derart unter Spannung gesetzt wird, dass die im Bereich dieses Ringraumes auf das Schlauchmaterial einwirkende Presskraft das Schlauchende drehfest gegen den unrunden Profilabschnitt presst. Im Bereich dieses unrunden Profilabschnitts wird das auf den Schlauchstutzen aufgeschobene Schlauchende drehfest fixiert, und zwar unabhängig davon, ob die Quetsch- oder Klemmhülse auch im Bereich des unrunden Profilabschnitts vercrimpt oder nicht vercrimpt wurde. Somit kann eine in Umfangsrichtung wirkende Kraft auf den Schlauch aufgebracht und über den Schlauch auch auf die mit ihm drehfest verbundene Schlauchkupplung übertragen werden, so dass sich eine Schraubverbindung zwischen der Schraubkupplung einerseits und beispielsweise einer sanitären Auslaufarmatur andererseits bei Bedarf leicht bewerkstelligen oder lösen lässt. Da der an dem dem freien Stutzenende abgewandten Teilbereich des Schlauchstutzens vorgesehene unrunde Profilabschnitt in Umfangsrichtung drei- oder viereckig ausgebildet ist, und dass die Ecken des unrunden Profilabschnitts über Hauptflächen verbunden sind, die konkav geformt oder plan ausgebildet sind, kann sich dieser unrunde Profilabschnitt derart sicher und fest in das Schlauchmaterial eingraben, dass eine Relativbewegung zwischen dem auf den Schlauchstutzen ausgeschobenen Schlauchende einerseits und der Schlauchkupplung andererseits kaum noch möglich ist. Damit das Schlauchende auf den Schlauchstutzen der sanitären Schlauchkupplung aufgeschoben werden kann und damit dazu sich der Schlauchstutzen erst in Aufschieberichtung in seinem Durchmesser erweitern lässt, ist erfindungsgemäß vorgesehen, dass der unrunde Profilabschnitt an dem dem freien Stutzenende abgewandten Teilbereich des Schlauchstutzens angeordnet ist. Ein solche, an dem dem freien Stutzenende abgewandten Teilbereich des Schlauchstutzens vorgesehener Profilabschnitt kann auch einen größeren Durchmesser aufweisen, um sich besonders gut in das zumindest in diesem Profilabschnitt gegebenenfalls auch aufgeweitete Schlauchmaterial des Wasserschlauchs eingraben zu können. Um das Schlauchende des flexiblen Wasserschlauches leicht auf den Schlauchstutzen aufschieben zu können, und um das auf den Schlauchstutzen aufgeschobene Schlauchende auch bequem über den unrunden Profilabschnitt zu bewegen, ist desweiteren vorgesehen, dass der Schlauchstutzen an seinem freien Stutzenendbereich einen sich zum freien Stutzenende hin konisch verjüngenden Aufschiebekonus hat. Da zwischen dem Aufschiebekonus und dem unrunden Profilabschnitt zumindest ein Ringflansch oder ein Ringabsatz vorgesehen ist, wird eine besonders belastbare und feste Verbindung zwischen dem Wasserschlauch und der erfindungsgemäßen Schlauchkupplung erreicht. Da der am Schlauchstutzen vorgesehene, zumindest eine Ringabsatz seitlich an dem Schlauchstutzen vorsteht, wird ein unbeabsichtigtes Abziehen des Schlauchendes vom Schlauchstutzen vermieden. Die erfindungsgemäße Schlauchkupplung lässt eine Drehmomentübertragung in einem gegebenenfalls auch definierten Umfang zu. Dabei ist das von der Quetschhülse umgriffene Schlauchende des Wasserschlauches auf dem Schlauchstutzen derart drehfest fixiert, dass der Wasserschlauch eine Drehmomentübertragung auf die Schlauchkupplung in einem definierten Umfange zulässt und dass der Wasserschlauch erst nach Überschreiten des definierten Drehmoments zerstörungsfrei relativ zur Schlauchkupplung beziehungsweise zum Kupplungs- Grundkörper verdreht werden kann. Lässt die erfindungsgemäße Schlauchkupplung eine Drehmomentübertragung in einem definierten Umfang zu, hat die Schlauchkupplung eine geradezu drehmomentschlüsselartige Wirkung, d. h. erst beim Überschreiten eines festgelegten Drehmoments erfolgt ein Durchrutschen zwischen Schlauch und Schlauchstutzen. Dieses Durchrutschen des Schlauches nach Überschreiten des festgelegten Drehmoments verhindert eine Zerstörung des Schlauches durch Übermäßige Torsion und ein Kollabieren des Schlauches, wie sie auftreten würde, wenn die Verbindung zwischen dem Schlauch und dem Schlauchstutzen absolut drehmomentsteif wäre. Dabei kann das Drehmoment beispielsweise auf einen Wert festgelegt werden, bei dem eine zwischen dem Kupplungs-Grundkörper einerseits und der Anschlussarmatur andererseits vorgesehene Ringdichtung derart komprimiert wird, dass eine feste und dichte Verbindung in diesem Bereich sichergestellt ist; wird das derart festgelegte Drehmoment überschritten, kann der Schlauch auf dem Schlauchstutzen durchrutschen, ohne dass eine übermäßige Torsion und ein Kollabieren des Schlauches zu befürchten wäre. Die erfindungsgemäße Schlauchkupplung weist also eine zerstörungsfreie Drehmomentbegrenzung auf, was der Einsatzsicherheit des Produktes, insbesondere auch bei der Montage von wenig qualifiziertem Personal, zugute kommt, da die unter Verwendung der erfindungsgemäßen Schlauchkupplung hergestellten Produkte so nicht vorbeschädigt werden können. Die erfindungsgemäße Schlauchkupplung zeichnet sich daher dadurch aus, dass sie die Montage des mit ihr verbundenen Wasserschlauches auch unter beengten Platzverhältnissen wesentlich erleichtert.

Die sichere und feste Verbindung zwischen der erfindungsgemäßen Schlauchkupplung einerseits und dem auf ihren Schlauchstutzen aufgeschobenen Schlauchende andererseits wird begünstigt, wenn die durch die langen Stützflächen gebildeten Ecken des unrunden Profilabschnitts jeweils einen spitzen Winkel ≤ 90 Grad einschließen. Schließen die Ecken des unrunden Profilabschnitts einen spitzen oder allenfalls einen rechten Winkel ein, bilden sich an den Ecken Grippkanten aus, die sich besonders gut in das Schlauchmaterial des Wasserschlauches eingraben können.

Damit die auf dem Schlauchstutzen der erfindungsgemäßen Schlauchkupplung vecrimpte Quetsch- oder Klemmhülse in verformtem Zustand sicher und fest an der Schlauchkupplung halten lässt, ist es vorteilhaft, wenn der dem freien Stutzenende abgewandte und vorzugsweise über das Schlauchende vorstehende Hülsenendbereich der Quetschhülse radial nach innen in Richtung zum Kupplungs-Grundkörper verformt ist.

Dabei sieht eine bevorzugte Ausführungsform gemäß der Erfindung vor, dass der radial nach innen verformte Hülsenendbereich mit seinem zum Kupplungs-Grundkörper weisenden Stirnrand einen runden oder gerundeten Teilbereich oder drehfest einen eckigen Teilbereich des Kupplungs-Grundkörpers umschließt. Umschließt der radial nach innen verformte Hülsenendbereich drehfest einen eckigen Teilbereich des Kupplungs-Grundkörpers, lässt sich eine drehfeste Verbindung zwischen der Schlauchkupplung, dem auf ihrem Schlauchstutzen aufgeschobenen Schlauchende und der Quetschhülse bewerkstelligen. Eine bevorzugte Ausführungsform sieht jedoch vor, dass der radial nach innen verformte Hülsenendbereich mit seinem zum Kupplungs-Grundkörper weisenden Stirnrand einen runden oder gerundeten Teilbereich umgreift, so dass die drehfeste Verbindung auf die Trennfläche zwischen dem Schlauchstutzen und dem auf ihn aufgeschobenen Schlauchende begrenzt werden kann und unerwünschte Drehmomente zwischen Quetschhülse und Schlauchende einerseits und zwischen Schlauchende und Schlauchstutzen vermieden werden.

Dabei sieht eine bevorzugte Ausführungsform gemäß der Erfindung vor, dass der zumindest eine Ringabsatz sich in Richtung zum freien Stutzenende hin konisch verjüngt und somit in Aufschieberichtung praktisch widerhakenartig wirksam ist.

Weitere Merkmale der Erfindung ergeben sich aus der folgenden Beschreibung eines erfindungsgemäßen Ausführungsbeispieles in Verbindung mit den Ansprüchen sowie der Zeichnungen. Die einzelnen Merkmale können je für sich oder zu mehreren bei einer Ausführungsform gemäß der Erfindung verwirklicht sein.

Es zeigt:
- Fig. 1: eine im einem Längsschnitt dargestellte sanitäre Schlauchkupplung mit einem profilierten Schlauchstutzen, auf den das eine Schlauchende eines flexiblen Wasserschlauches aufgeschoben und mittels einer auf das Schlauchende vercrimpten Quetschhülse fixiert ist,
- Fig. 2: die Schlauchkupplung aus Fig. 1 in einem durch den Schlauchstutzen gelegten Querschnitt in Schnittebene II-II aus Fig. 1,
- Fig. 3: die Schlauchkupplung aus Fig. 1 und 2 in einem Längsschnitt in Schnittebene III-III aus Fig. 2,
- Fig. 4: einen Detail-Längsschnitt der Schlauchkupplung aus Fig. 1 bis 3 im Verbindungs- und Übergangsbereich zwischen Quetschhülse, Schlauchkupplung und Wasserschlauch,
- Fig. 5: die Schlauchkupplung aus Fig. 1 bis 4, in einer perspektivischen Darstellung,
- Fig. 6: zwei, mit Fig. 1 bis 5 vergleichbare Schlauchkupplungen in einer typischen und hier im Längsschnitt dargestellten Einbausituation, wobei die Schlauchkupplungen an dem dem Wasserauslauf abgewandten Ende des Armaturenkörpers einer sanitären Auslaufarmatur befestigt sind, und
- Fig. 7: eine mit Fig. 1 bis 6 vergleichbare Schlauchkupplung, wobei auf den Schlauchstutzen dieser längsgeschnitten dargestellten Schlauchkupplung ein mit einem Metall- oder Kunststoffgeflecht umflochtener Wasserschlauch aufgeschoben ist.

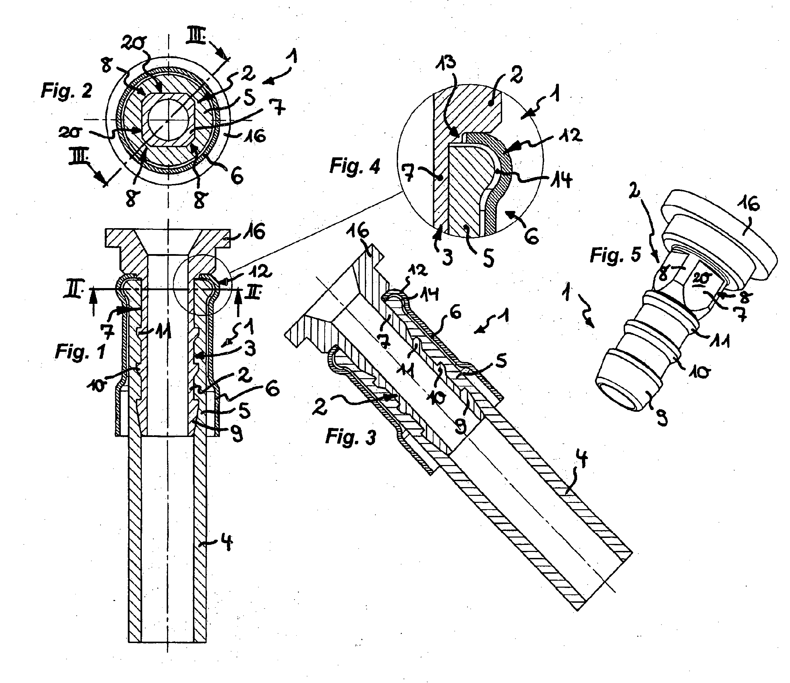

In den Figuren 1 bis 5 ist eine Schlauchkupplung 1 dargestellt, die einen rohrförmigen Kupplungs-Grundkörper 2 hat. Der Kupplungs-Grundkörper 2 weist an zumindest einem seiner Grundkörper-Endbereiche einen Schlauchstutzen 3 auf, der zum Aufschieben eines flexiblen Wasserschlauches 4 bestimmt ist. Um einem unbeabsichtigten Abziehen des auf den Schlauchstutzen 3 aufgeschobenen Schlauchendes 5 entgegenzuwirken, ist der Schlauchstutzen 3 zumindest in einem Teilbereich profiliert ausgebildet.

Der Schlauchkupplung 1 ist eine Quetschhülse 6 zugeordnet, die das auf den Schlauchstutzen 3 aufgeschobene Schlauchende 5 umgreift. Diese Klemm- oder Quetschhülse 6 ist auf dem Schlauchende 5 derart vercrimpt, dass es in dem hier dargestellten verformten Zustand das Schlauchende 5 des Wasserschlauches 4 auf dem Schlauchstutzen 3 fixiert.

Um das von der Quetschhülse 6 umgriffene Schlauchende 5 des Wasserschlauches 4 auf dem Schlauchstutzen 3 drehfest fixieren zu können und um eine Drehmomentübertragung zumindest in begrenztem Umfang zwischen Schlauch 4 und Schlauchkupplung 1 zu erreichen, weist der Schlauchstutzen 3 in seinem vom Schlauchende 5 umgriffenen Bereich einen in Umfangsrichtung unrunden Profilabschnitt 7 auf.

Damit sich eine möglichst belastbare drehfeste Verbindung zwischen Schlauchende 5 und Schlauchstutzen 3 ergibt, ist der unrunde Profilabschnitt 7 in Umfangsrichtung eckig ausgebildet. Die Ecken 8 des unrunden Profilabschnitts 7 sind über Hauptflächen verbunden, die hier eben oder plan ausgebildet sind. Statt der hier gezeigten planen Hauptflächen können diese aber auch konvex oder konkav geformt sein, wenn beispielsweise eine hohe Drehmomentübertragung angestrebt wird. Die Ecken 8 dieses unrunden Profilabschnitts 7 können sich praktisch grippkantenartig in das Schlauchmaterial eingraben, wenn die durch die langen Stützflächen 20 gebildeten Ecken des unrunden Profilabschnitts 7 jeweils einen spitzen Winkel ≤ 90 Grad einschließen. Der unrunde Profilabschnitt 7 ist hier dazu vierkantig ausgebildet.

Das Aufschieben des Schlauchendes 5 auf den Schlauchstutzen 3 wird erleichtert, wenn der Schlauchstutzen 3 in seinem freien Stutzenendbereich einen sich zum freien Stutzenende hin konisch verjüngenden Aufschiebekonus 9 hat. Damit der unrunde Profilabschnitt 7 demgegenüber mit einem größeren, das Schlauchende 5 gegebenenfalls auch aufweitenden Durchmesser ausgestaltet werden kann, ist es vorteilhaft, wenn der unrunde Profilabschnitt 7 an dem dem freien Stutzenende abgewandten Teilbereich des Schlauchstutzens 3 vorgesehen ist.

Aus den Fig. 1 bis 5 wird deutlich, dass zwischen dem Aufschiebekonus 9 und dem unrunden Profilabschnitt 7 mehrere Ringflansche oder Ringabsätze 10, 11 vorgesehen sind, die einem unbeabsichtigten Abziehen des Schlauchendes 5 vom Schlauchstutzen 3 ebenfalls entgegenwirken sollen.

Während die dem Wasserschlauch 4 abgewandten Stirnflächen der Ringabsätze 10, 11 und ebenso des Aufschiebekonus 9 in radialen Ebenen angeordnet sind, verjüngen sich auch die Ringabsätze 10, 11 in Richtung zum freien Stützenende hin derart konisch, dass das Schlauchende 5 praktisch widerhakenartig auf dem Schlauchstutzen 3 gehalten wird.

Aus einem Vergleich der Fig. 1 und 5 und insbesondere aus dem Detail-Längsschnitt in Fig. 4 wird deutlich, dass der dem freien Stutzenende abgewandte und vorzugsweise über das Schlauchende 5 vorstehende Hülsenendbereich 12 der Quetschhülse 6 radial nach innen in Richtung zum Kupplungs-Grundkörper 2 verformt ist. Daher umgreift der radial nach innen verformte Hülsenendbereich 12 mit seinem zum Kupplungs-Grundkörper 2 weisenden Stirnrand einen runden oder gerundeten Teilbereich 13 des Kupplungs-Grundkörpers 2. Dieser runde Teilbereich 13 des Kupplungs-Grundkörpers, der von dem radial nach innen verformten Hülsenendbereich 12 der Quetschhülse 6 umgriffen wird, zentriert die Quetschhülse 6 während der Montage und insbesondere während des Vercrimpens der Quetschhülse 6 am KupplungsGrundkörper 2. Darüber hinaus kann dieser runde Teilbereich 13 des Kupplungs-Grundkörpers 2, der als zylindrischer Bund ausgebildet ist, auch als Führung für die Qeutschhülse 6 dienen.

Nachdem das Schlauchende 5 eines flexiblen Wasserschlauches 4 auf den Schlauchstutzen 3 der Schlauchkupplung 1 aufgeschoben und das Schlauchende 5 auf dem Schlauchstutzen 3 durch Vercrimpen der Quetschhülse 6 in einem Hülsen-Teilbereich fixiert wurde, wird ein Kraftschluss zwischen dem Schlauch 4 und dem rohrförmigen Kupplungs-Grundkörper 2 der Schlauchkupplung 1 hergestellt. Dabei wird im oberen, nicht vercrimpten Hülsenendbereich der Quetschhülse 6 ein geschlossener ringförmiger Raum 14 erzeugt, der mit Schlauchmaterial gefüllt ist. Durch die Verformung der Quetschhülse 6 in ihrem vercrimpten Teilbereich wird das Schlauchmaterial zum einen in Richtung zur Schlauchseite gepresst, wo es sich mangels eines entsprechenden Widerstandes entspannen kann; zum anderen wird das Schlauchmaterial in den ringförmigen Ringraum 14 gepresst, der nach innen durch den Kupplungs-Grundkörper 2 und nach außen durch die Quetschhülse 6 begrenzt wird. In diesem Ringraum 14 wird das Schlauchmaterial derart unter Spannung gesetzt, dass die im Bereich der Ringkammer 10 auf das Schlauchmaterial einwirkende Presskraft das Schlauchende drehfest gegen den unrunden Profilabschnitt 7 presst. Wird nun ein Drehmoment aufgebracht, kann sich der Kupplungs-Grundkörper 2 am Schlauchmaterial abstützen. Die Elastizität des Schlauchmaterials reicht nicht aus, um im geschlossenen Ringraum 14 der Quetschhülse 6 genug auszuweichen und um ein Verdrehen des Kupplungs-Grundkörpers 3 relativ zum Wasserschlauch 4 zuzulassen.

Durch die erfindungsgemäße Ausgestaltung der hier dargestellten Schlauchkupplung 1 wird ein Verdrehen des Kupplungs-Grundkörpers 2 relativ zum Wasserschlauch 4 verhindert. Der hier dargestellte Wasserschlauch lässt daher eine Drehmomentübertragung in einem gegebenenfalls auch definierten Umfang von beispielsweise 1,5 Nm zu. Um eine solche Drehmomentübertragung auch in einem definierten Umfang zu erreichen oder zu erleichtern, kann es zweckmäßig sein, die als Schneidkanten ausgebildeten Ecken 8 des unrunden Profilabschnitts 7 - wie hier - stumpf oder gerundet auszugestalten. Dabei ist das von der Quetschhülse 6 umgriffene Schlauchende 5 des Wasserschlauches 4 auf dem Schlauchstutzen 3 derart drehfest fixiert, dass der Wasserschlauch 3 eine Drehmomentübertragung auf die Schlauchkupplung 1 in einem definierten Umfang zulässt, wobei der Wasserschlauch 3 erst nach Überschreiten des definierten Drehmoments zerstörungsfrei relativ zur Schlauchkupplung 1 beziehungsweise zum Kupplungs-Grundkörper 2 verdreht werden kann. Die Schlauchkupplung 1 hat dadurch eine geradezu drehmomentschlüsselartige Wirkung, was der Einsatzsicherheit des unter Verwendung der Schlauchkupplung 1 hergestellten Produktes, insbesondere auch bei der Montage von wenig qualifiziertem Personal, zugute kommt, da diese Produkte so nicht vorbeschädigt werden können.

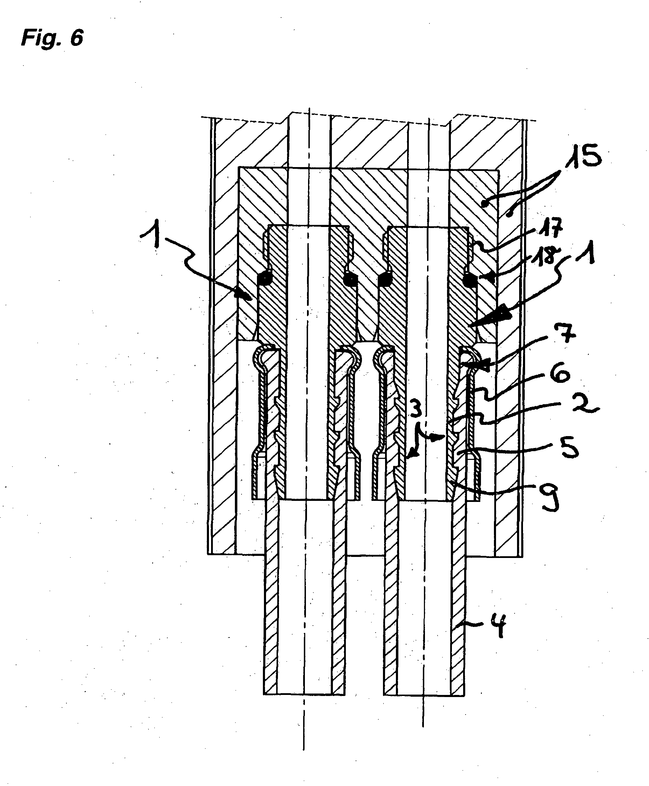

In Fig. 6 ist eine typische Einbausituation in einem Längsschnitt dargestellt. Fig. 6 zeigt den dem Wasserauslauf abgewandten unteren Teilbereich des Armaturenkörpers 15 einer ansonsten nicht weiter dargestellten sanitären Auslaufarmatur. Wie aus Fig. 6 zu erkennen ist, weist der Armaturenkörper einen Hohlraum auf, in dessen Innenraum zwei Innengewinde zur Befestigung von zwei flexiblen Wasserschläuchen (warm, kalt) vorgesehen sind. Während die Schlauchkupplung 1 in den Fig. 1 bis 5 an dem dem Schlauchstutzen 3 abgewandten Endbereich des Kupplungs-Grundkörpers 2 einen Ringflansch 16 für eine Überwurfmutterverschraubung hat, ist an den Schlauchkupplungen 1 in Fig. 6 jeweils ein Außengewinde 17 mit einem Dichtring 18 vorgesehen. Die Schlauchkupplungen 1 können mit ihrem Außengewinde 17 derart in die am Armaturenkörper 15 vorgesehenen Innengewinde eingedreht werden, bis die dazwischen vorgesehenen Dichtringe 18 eine flüssigkeitsdichte Verbindung ergeben. Da wegen der vertieften Einbaulage der Schlauchkupplungen 1 im Armaturenkörper 15 selbst kein Werkzeug zum Eingriff gebracht werden kann, ist es ein besonderer Vorzug der hier dargestellten Schlauchkupplung 1, dass sie selbst eine erhöhte Torsionsmomentübertragung zwischen dem Wasserschlauch 4 und dem Kupplungs-Grundkörper 2 erlaubt. Auch bei dem in Fig. 6 dargestellten Ausführungsbeispiel ist das von der Quetschhülse 6 umgriffene Schlauchende 5 des Wasserschlauches 4 auf dem Schlauchstutzen 3 derart drehfest fixiert, dass der Wasserschlauch 3 eine Drehmomentübertragung auf die Schlauchkupplung 1 in einem definierten Umfang zulässt. Dabei ist das über den Wasserschlauch 3 auf die Schlauchkupplung 1 übertragbare Drehmoment derart bemessen und festgelegt, dass der zwischen der Schlauchkupplung 1 und dem Armaturenkörper 15 vorgesehene Dichtring 18 mit einem ausreichenden Anpressdruck radial verpresst werden kann, um eine feste und dichte Schlauchverbindung sicherzustellen. Wird dieses festgelegte Drehmoment überschritten, kann der Schlauch 4 auf dem Schlauchstutzen 3 zerstörungsfrei zur Schlauchkupplung 1 beziehungsweise zum Kupplungs-Grundkörper 2 verdreht werden, ohne dass eine Beschädigung des Wasserschlauches 4 zu befürchten ist. Somit ist auch unter den in Fig. 6 beispielhaft dargestellten Bedingungen, in denen das im Armaturenkörper 15 vorgesehene Innengewinde angesichts der engen Platzverhältnisse nur schwer zugänglich ist, eine Montage und Demontage der Schlauchkupplung 1 vergleichsweise einfach möglich.

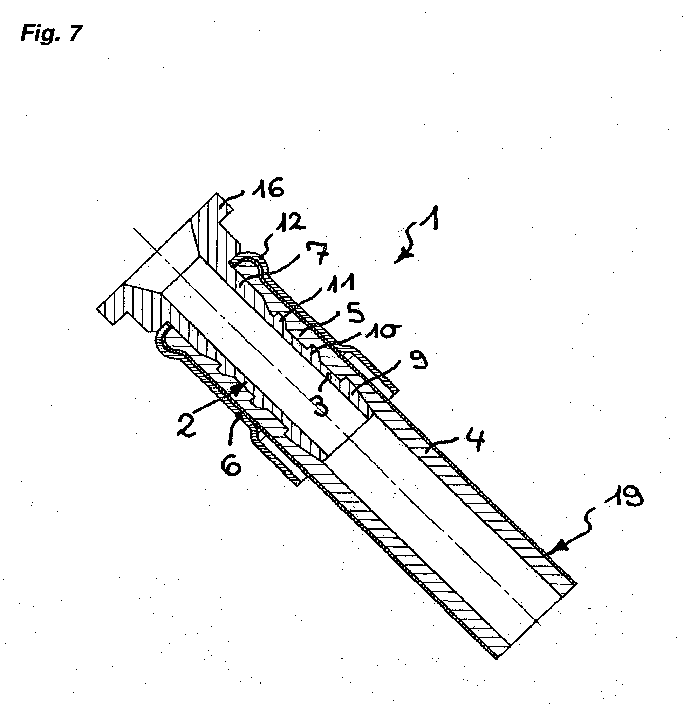

In Fig. 7 ist dargestellt, dass der aus elastomerem Material hergestellte Wasserschlauch 4 an seinem Außenumfang auch mit einem Metall- oder Kunststoffgeflecht 19 umflochten sein kann, mit dem sich eine erhöhte Druckfestigkeit des Wasserschlauches 4 erreichen lässt.

Nicht dargestellt ist ein mit Figur 7 vergleichbarer Schlauchaufbau, bei dem das Metall- oder Kunststoffgeflecht 19 noch zusätzlich mit einem Schutzmantel überzogen ist, der eine hygienisch glatte Oberfläche gewährleistet.

## Patentansprüche

1. Sanitäre Schlauchkupplung (1) mit einem rohrförmigen Kupplungs-Grundkörper (2), der an zumindest einem seiner Grundkörper-Endbereiche einen, zumindest in einem Teilbereich profilierten Schlauchstutzen (3) zum Aufschieben eines flexiblen Wasserschlauches (4) hat, welcher an seinem freien Stutzenendbereich einen sich zum freien Stutzenende hin konisch verjüngenden Aufschiebekonus (9) hat, sowie mit einer Quetschhülse (6), die in verformtem Zustand ein von der Quetschhülse (6) umgriffenes Schlauchende (5) des Wasserschlauches (4) auf dem Schlauchstutzen (3) fixiert, wobei das von der Quetschhülse (6) umgriffene Schlauchende (5) des Wasserschlauches (4) auf dem Schlauchstutzen (3) drehfest fixierbar ist, wobei das Schlauchende (5) auf einen in Umfangsrichtung unrunden Profilabschnitt (7) des Schlauchstutzens (3) aufschiebbar ist, der an dem dem freien Stutzenende abgewandten Teilbereich des Schlauchstutzens (3) vorgesehen ist, und wobei zwischen dem Aufschiebekonus (9) und dem unrunden Profilabschnitt (7) zumindest ein Ringflansch oder ein Ringabsatz (10, 11) vorgesehen ist, **dadurch gekennzeichnet, dass** der unrunde Profilabschnitt (7) in Umfangsrichtung drei- oder viereckig ausgebildet ist, und dass die Ecken (8) des unrunden Profilabschnitts (7) über Hauptflächen verbunden sind, die konkav geformt oder plan ausgebildet sind.

2. Schlauchkupplung nach Anspruch 1, **dadurch gekennzeichnet, dass** die Ecken (8) des unrunden Profilabschnitts (7) jeweils einen spitzen Winkel ≤ 90° einschließen.

3. Schlauchkupplung nach Anspruch 1 oder 2, **dadurch gekennzeichnet, dass** der dem freien Stutzenende abgewandte und vorzugsweise über das Schlauchende (5) vorstehende Hülsenendbereich (12) der Quetschhülse (6) radial nach innen in Richtung zum Kupplungs-Grundkörper (2) verformt ist.

4. Schlauchkupplung nach Anspruch 3, **dadurch gekennzeichnet, dass** der radial nach innen verformte Hülsenendbereich (12) mit seinem zum Kupplungs-Grundkörper (2) weisenden Stirnrand einen runden oder gerundeten Teilbereich (13) oder drehfest einen eckigen Teilbereich des Kupplungs-Grundkörpers (2) umgreift.

5. Schlauchkupplung nach einem der Ansprüche 1 bis 4, **dadurch gekennzeichnet, dass** der zumindest eine Ringabsatz (10, 11) sich in Richtung zum freien Stutzenende hin konisch verjüngt.

## Claims

1. Sanitary hose coupling (1) with a tubular coupling main body (2), which at least at one of its main body-end regions comprises a hose connector (3), profiled at least in a partial region, to be pushed onto a flexible water hose (4), which comprises a slide cone (9) at its free connector end region tapering conically towards the free connector end, as well as with a crimp sleeve (6), which in the deformed state fixes a hose end (5) of the water hose (4) encompassed by the crimp sleeve (6) to the hose connector (3), wherein the hose end (5) of the water hose (4) encompassed by the crimp sleeve (6) can be fixed to the hose connector (3) for conjoint rotation therewith, wherein the hose end (5) can be pushed onto a profiled section (7) of the hose connector (3) which is non-round in a circumferential direction, which section is provided on the partial region of the hose connector (3) facing away from the free connector end, and wherein at least one annular flange or an annular shoulder (10, 11) is provided between the slide cone (9) and the non-round profiled section (7), **characterised in that** the non-round profiled section (7) is formed as a triangle or rectangle in the circumferential direction, and **in that** the corners (8) of the non-round profiled section (7) are connected via main surfaces which are formed to be concave or planar.

2. Hose coupling as claimed in claim 1, **characterised in that** the corners (8) of the non-round profiled section (7) each form an acute angle ≤ 90°.

3. Hose coupling as claimed in claim 1 or 2, **characterised in that** the sleeve end region (12) of the crimp sleeve (6), facing away from the free connector end and protruding preferably beyond the hose end (5), is deformed radially inwardly in the direction of the coupling main body (2).

4. Hose coupling as claimed in claim 3, **characterised in that** the radially inwardly deformed sleeve end region (12) encompasses with its end edge facing the coupling main body (2) a round or rounded partial region (13) or, for conjoint rotation therewith, an angular partial region of the coupling main body (2).

5. Hose coupling as claimed in any one of claims 1 to 4, **characterised in that** the at least one annular shoulder (10, 11) conically tapers in the direction of the free connector end.

## Revendications

1. Raccord de tuyaux sanitaire (1) avec un corps de base de raccord tubulaire (2), qui comporte à au moins l'une de ses régions d'extrémité du corps de base un embout de tuyau profilé (3) au moins dans une région partielle pour l'engagement d'un tuyau flexible à eau (4), qui comporte à sa région d'extrémité d'embout libre un cône d'engagement (9) se rétrécissant en cône en direction de l'extrémité d'embout libre, ainsi qu'avec une douille d'écrasement (6) qui fixe dans son état déformé une extrémité de tuyau (5) du tuyau d'eau (4) entourée par la douille d'écrasement (6) sur l'embout de tuyau (3), dans lequel l'extrémité de tuyau (5) du tuyau d'eau (4) entourée par la douille d'écrasement (6) peut être fixée sans rotation sur l'embout de tuyau (3), dans lequel l'extrémité de tuyau (5) peut être engagée sur une partie de profilé (7) de l'embout de tuyau (3) non ronde en direction périphérique, qui est prévue sur la région partielle de l'embout de tuyau (3) opposée à l'extrémité d'embout libre, et dans lequel il est prévu entre le cône d'engagement (9) et la partie de profilé non ronde (7) au moins une bride annulaire ou un épaulement annulaire (10, 11), **caractérisé en ce que** la partie de profilé non ronde (7) est de forme triangulaire ou carrée en direction périphérique et **en ce que** les coins (8) de la partie de profilé non ronde (7) sont reliés par des faces principales, qui sont de forme concave ou qui sont planes.

2. Raccord de tuyaux selon la revendication 1, **caractérisé en ce que** les coins (8) de la partie de profilé non ronde (7) forment chaque fois un angle aigu ≤ 90°.

3. Raccord de tuyaux selon la revendication 1 ou 2, **caractérisé en ce que** la région d'extrémité de douille (12) de la douille d'écrasement (6) opposée à l'extrémité d'embout libre et de préférence saillante au-delà de l'extrémité de tuyau (5) est déformée radialement vers l'intérieur en direction du corps de base de raccord (2).

4. Raccord de tuyaux selon la revendication 3, **caractérisé en ce que** la région d'extrémité de douille (12) déformée radialement vers l'intérieur entoure avec son bord frontal orienté vers le corps de base de raccord (2) une région d'extrémité ronde ou arrondie (13) ou sans rotation une région partielle polygonale du corps de base de raccord (2).

5. Raccord de tuyaux selon l'une quelconque des revendications 1 à 4, **caractérisé en ce que** ledit au moins un épaulement annulaire (10, 11) se rétrécit en cône en direction de l'extrémité d'embout libre.
